# FASCICULE DE BREVET EUROPEEN

(11) **EP 1 040 448 B1**
(45) Date de publication et mention de la délivrance du brevet: **02.05.2002**
(21) Numéro de dépôt: 98959954.3
(22) Date de dépôt: 10.12.1998
(51) Int. Cl.: G06K 19/073

(54) **CARTE A PUCE MUNIE D'UNE ETIQUETTE DE GARANTIE**
CHIPKARTE MIT EINEM SICHERHEITSSIEGEL
SMART CARD PROVIDED WITH GUARANTEE LABEL

(30) Priorité: 15.12.1997 FR 9716412
(43) Date de publication de la demande: 04.10.2000
(73) Titulaire: GEMPLUS, 13881 Gémenos Cédex (FR)
(72) Inventeur: BRUNET, Olivier, F-13008 Marseille (FR); ELBAZ, Didier, F-13010 Marseille (FR)
(86) Numéro de dépôt international: FR9802691
(87) Numéro de publication internationale: WO9931625

(56) Documents cités:
- EP-A- 0 689 163
- EP-A- 0 706 153
- DE-A- 19 530 608

## Description

La présente invention concerne les cartes à circuit(s) intégré(s) dites cartes à puce munies d'un dispositif de garantie de non utilisation.

De nombreuses cartes à puce sont utilisées comme moyen de paiement et sont chargées avec un crédit souvent constitué par une somme d'argent ou par un certain nombre d'unités de consommation telles que par exemple des taxes de base de communication téléphonique.

Ces cartes à puce sont vendues dans le commerce et il est nécessaire de garantir à l'acheteur que la carte qu'il achète est « vierge », c'est-à-dire qu'elle n'a jamais été utilisée et que son crédit de consommation est maximal, c'est-à-dire qu'il correspond à la valeur nominale de la carte.

Actuellement, ceci est obtenu en emballant les cartes à puce dans un film plastique généralement transparent et scellé. Cette garantie n'est pas très efficace pour les cartes à puce fonctionnant sans contact, c'est-à-dire dans lesquelles l'interface d'échange avec les appareils de perception ou de paiement est une antenne intégrée à la carte.

Par ailleurs, le déballage de la carte à puce est souvent difficile car l'emballage plastique de protection et de garantie ne se déchire pas facilement. De plus, ces emballages constituent un déchet qui est souvent jeté par l'acheteur au moment où il utilise sa carte à puce pour la première fois. Par ailleurs, le prix de l'emballage plastique, et surtout sa mise en place, entraînent un coût non négligeable.

Il a déjà été proposé dans EP-A-0 689 163 de prévoir une étiquette de garantie constituée par un dépôt de matière qui masque l'interface de la carte à puce (antenne ou contacts électriques) et qui peut être éliminée par grattage. Cette opération de grattage n'est pas toujours facile ni très rapide.

Par ailleurs, comme cette étiquette est appliquée sur le module électronique de la carte à puce, le grattage risque d'endommager le module, c'est-à-dire la partie active de la carte à puce.

Enfin il peut rester des résidus du grattage qui peuvent gêner le fonctionnement des lecteurs-récepteurs de la carte à puce.

Le document DE-195.30.608 décrit un dispositif de sécurité pour carte à puce. Ce dispositif est constitué par un hologramme fixé par adhésif sur les contacts de la carte à puce, de sorte que ces contacts ne puissent venir en contact électrique avec les contacts d'un lecteur de la carte. Comme l'hologramme est isolant, il ne peut empêcher une utilisation (frauduleuse) de la carte si celle-ci peut également fonctionner sans contact notamment.

Le problème à la base de l'invention est de fournir un dispositif de garantie de non utilisation pour une carte à puce qui ne présente pas les inconvénients précités.

A cet effet, l'invention a pour objet une carte à puce, conforme à la revendication 1.

Cette étiquette est facile à mettre en place sur la carte à puce de manière automatique ou manuelle et son prix de revient est faible. Le collage avec possibilité de rupture adhésive permet d'arracher facilement l'étiquette en une seule fois sans possibilité de dégradation de la carte à puce, en particulier de sa partie active.

L'étiquette est de dimensions réduites et, si elle est jetée, elle constitue un déchet beaucoup moins gênant que les emballages plastiques et qui est de plus rapidement dégradable.

Enfin, cette étiquette ne laisse pas de traces sur la carte à puce qui risqueraient de gêner le fonctionnement des lecteurs.

D'autres caractéristiques et avantages de l'invention ressortiront de la description qui suit en se référant aux dessins annexés dans lesquels :
- la figure 1 représente schématiquement, en vue de dessus, un premier mode de réalisation d'une carte à puce conforme à l'invention ;
- la figure 2 représente schématiquement, en vue de dessus, un second mode de réalisation de l'invention ; et
- la figure 3 représente un troisième mode de réalisation dans le cas d'une carte à puce fonctionnant sans contact.
- la figure 4 représente un autre mode de réalisation d'une étiquette munie d'informations de sécurité;
- les figures 5 et 6 représentent respectivement une étiquette à la forme du module et à la forme d'un logo.

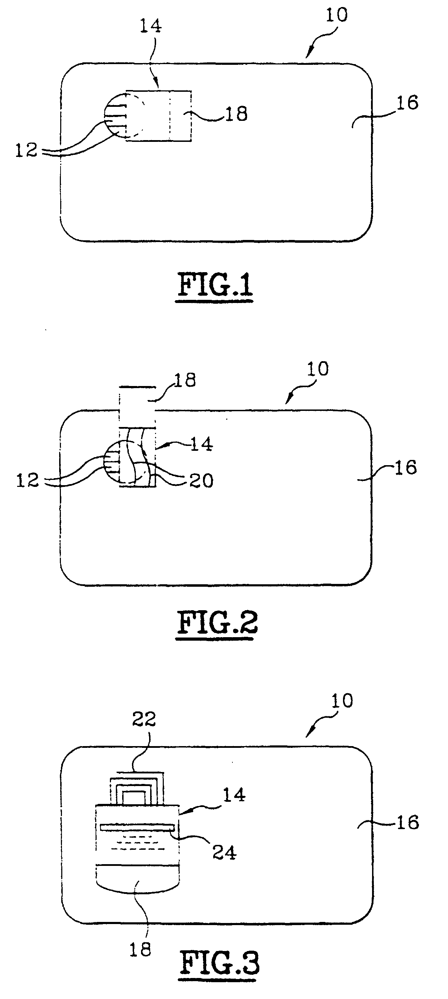

On voit sur la figure 1, une carte à puce 10 qui est destinée par exemple au paiement de services tels que le téléphone ou de l'accès à différents services municipaux. Cette carte à puce peut aussi être un porte-monnaie électronique.

La carte à puce 10 comprend un module électronique dans lequel, en particulier, sont mémorisées des informations concernant le montant du crédit de prestations offertes par la carte. Elle comporte également un corps de carte dont une surface principale 16 comporte généralement des impressions graphiques.

Le module électronique comprend une interface d'échange avec l'extérieur qui est ici constituée par des bornes ou plots de connexion 12 dont on voit une partie sur la figure 1.

Conformément à l'invention, on a fixé sur la carte à puce 10, avant sa commercialisation, une étiquette 14 qui est fixée par collage, avec possibilité de rupture adhésive, sur la face supérieure de la carte. Cette étiquette 14 recouvre au moins partiellement l'interface du module constituée par les contacts électriques 12.

L'étiquette 14 peut être réalisée sous forme d'un film en polyimide, papier ou autre et d'un adhésif qui permet d'obtenir une rupture adhésive de l'étiquette quand on tire dessus. Cet adhésif est avantageusement thermoactivable, ce qui facilite sa mise en place.

L'étiquette 14 est enlevée en un seul morceau et ne laisse pas de traces sur la carte à puce, en particulier au niveau du module qui était au moins partiellement masqué par l'étiquette.

L'étiquette 14 comporte une partie 18 dont la face inférieure tournée vers la carte 10 ne comporte pas d'adhésif et qui n'est donc pas collée sur la carte à puce 10. Cette partie non collée constitue une languette de préhension 18 qui permet de bien saisir l'étiquette 14 pour l'arracher d'un seul coup et en entier.

L'étiquette 14 est avantageusement réalisée à partir d'une bobine de film sur lequel l'adhésif est contrecollé. On découpe ensuite des étiquettes de la dimension et de la forme désirées pour les fixer sur le module, par exemple par pressage à chaud.

Les paramètres du collage et la colle sont définis pour obtenir une bonne adhérence sur la carte à puce 10, et en particulier, sur le module tout en garantissant un retrait facile de l'étiquette 14 lorsque l'on tire dessus.

Le procédé de collage peut être automatique pour la production de grandes quantités de cartes ou manuel pour des petites quantités. Cette étape pourra éventuellement être effectuée par un tiers si celui-ci a besoin de réaliser une opération intermédiaire avant la vente au client final. Cette étape peut par exemple être une personnalisation électrique ou graphique de la carte.

Sur la figure 2, l'étiquette 14 comporte une languette non collée 18 qui dépasse latéralement du contour de la carte à puce 10 de manière à faciliter encore l'arrachage de l'étiquette.

Par ailleurs, sur la figure 2, l'étiquette 14 présente des prédécoupes 20 de manière à obtenir un déchirement de l'étiquette quand on l'enlève, ce qui empêche de replacer l'étiquette 14 après l'avoir ôtée.

L'étiquette 14 peut être réalisée dans un matériau changeant de forme et/ou de couleur quand il est soumis à une contrainte mécanique. Cette forme de réalisation permet de détecter facilement toute tentative de fraude.

Avantageusement, pour pouvoir détecter toute tentative de replacer une autre étiquette sur un module après avoir utilisé la carte à puce, on peut porter une information spécifique à la carte à puce sur l'étiquette. Cette information, peut être de type publicitaire, un graphisme Intégrant et prolongeant le graphisme de la carte, une information de traçabilité reproduisant des informations portées sur le reste de la carte. On peut aussi prévoir des éléments sécuritaires imprimés tels qu'une guilloche, une inscription visible seulement avec un rayonnement ultraviolet ou encore des microlignes.

L'inscription peut aussi être constituée par un hologramme qui est un élément très sécurisé car il est difficile à reproduire.

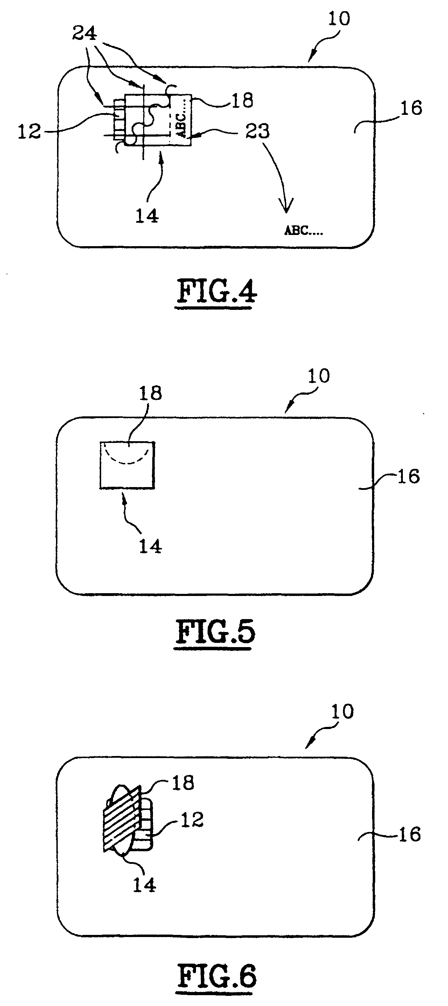

Sur la figure 3, on a représenté une carte à puce fonctionnant sans contact, l'interface étant constituée par une antenne 22 intégrée dans la carte. Dans ce cas, l'étiquette 14 comporte un élément conducteur 24 dans sa face inférieure. Cet élément court-circuite au moins une partie des spires de l'antenne et rend l'antenne inutilisable tant que l'étiquette 14 est présente.

On voit que l'invention permet d'obtenir une étiquette de garantie 14 qui peut être facilement enlevée sans créer de déchets importants. La carte à puce et, en particulier, le module restent intacts et il n'y pas production de matière pouvant gêner le fonctionnement des lecteurs.

L'invention permet, grâce au mode de réalisation de la figure 3, d'empêcher tout fonctionnement de l'antenne et , par suite de la carte à puce.

Dans le cas d'un court-circuit avec antenne interne, la carte peut comporter des éléments de liaison de l'antenne débouchant à l'extérieur et qui sont en contact avec l'élément de court-circuit. Les éléments de liaison peuvent être formés par des puits métallisés.

Dans le cas où l'antenne est interne, l'étiquette peut comporter un film métallique formant écran à une communication électromagnétique avec l'extérieur. Cet écran peut comporter un circuit à antenne apte à perturber ou détourner une communication électromagnétique avec l'extérieur. Un écran est si besoin disposé de chaque côte de la carte et couvre de préférence l'intégralité de l'antenne.

Dans le cas d'une interface à antenne interne et à contacts, on peut utiliser certaines plages de contacts de l'interface pour relier l'élément de court-circuit à l'antenne interne

A la figure 4, l'étiquette est collée en partie sur les contacts et en partie sur la surface d'impression. Elle comporte une languette non collée. Une information est de préférence disposée sur l'étiquette notamment sur la languette. Dans l'exemple, l'information est représentée par (ABC....). Elle peut correspondre à un identifiant pouvant servir à la traçabilité de la carte. L'information (ABC...) peut être reportée sur la carte pour indiquer que l'étiquette est bien celle qui lui est associée.

La carte peut comporter également un ou plusieurs lignes 24 s'étendant sur le corps de carte et se prolongeant sur l'étiquette. Toute tentative de remise en place de l'étiquette sérail alors détectée par un défaut d'alignement de ces lignes.

Ces lignes peuvent être réalisées par gravure ou réticulation. L'étiquette peut être gravée au laser après son collage, la gravure étant dosée pour marquer également la couche superficielle du module.

On peut également prévoir un marquage par jet d'encre ou transfert thermique.

A la figure 5, l'étiquette a la forme du module qu'elle couvre intégralement. Elle comporte une zone non collée 18 notamment en forme d'ongle pour faciliter le décollage. Cette réalisation a l'avantage de ne pas masquer l'impression éventuelle présente sur la carte.

A la figure 6, l'étiquette a la forme d'un logo. Elle peut donc avoir une fonction supplémentaire qui est de véhiculer le logo par exemple du fabricant ou du distributeur.

## Revendications

1. Carte à puce (10) comportant un module électronique muni d'une interface de communication électrique et/ou électromagnétique constituée par des contacts électriques (12) et/ou une antenne (22), **caractérisée en ce qu'**elle comporte au moins une étiquette de garantie (14) collée sur une de ses surfaces et décollable avec une rupture adhésive, ladite étiquette comportant sur sa face inférieure un élément de court-circuit (24) court-circuitant l'interface (12, 22), laquelle est électriquement accessible depuis ladite surface, afin d'empêcher ladite interface de communiquer avec l'extérieur.

2. Carte à puce selon la revendication 1, **caractérisée en ce que en ce que** l'étiquette est apte à révéler son repositionnement après son décollage.

3. Carte à puce selon la revendication 1 ou 2, **caractérisée en ce que** l'étiquette comporte un film isolant empêchant une communication électrique.

4. Carte à puce selon la revendication 1, **caractérisée en ce qu'**elle comporte une antenne interne et des éléments de liaison de l'antenne avec ledit élément de court-circuit (24).

5. Carte à puce selon la revendication 4, **caractérisée en ce que** les éléments de liaison sont formés par des puits métallisés.

6. Carte à puce selon la revendication 4, **caractérisée en ce que** l'interface est de type à contact et à antenne, et **en ce que** lesdits éléments de liaison sont reliés à l'élément de court-circuit via l'interface à contacts.

7. Carte à puce selon l'une des revendications précédentes, **caractérisée en ce que** l'étiquette (14) comporte une languette de préhension (20) non collée.

8. Carte à puce selon l'une quelconque des revendications précédentes, **caractérisée en ce que** l'étiquette (22) comporte une prédécoupe (20) provoquant sa destruction lors de l'arrachement.

9. Carte à puce selon l'une quelconque des précédentes, **caractérisée en ce que** l'étiquette (14) est réalisée dans un matériau changeant d'aspect sous l'action d'une contrainte mécanique.

10. Carte à puce selon l'une quelconque des revendications précédentes, **caractérisée en ce que** l'étiquette (14) comporte une information sur sa face extérieure.

## Patentansprüche

1. Chipkarte (10) mit einem elektronischen Modul, ausgestattet mit einem elektrischen und/oder elektromagnetischen, aus elektrischen Kontakten (12) und/oder einer Antenne (22) bestehenden Dialoginterface, **dadurch gekennzeichnet, dass** sie mindestens ein Garantie-Etikett (14) umfasst, das auf eine ihrer Flächen geklebt ist und durch einen Bruch des Klebstoffs abgelöst werden kann, wobei das besagte Etikett an seiner Unterseite ein Kurzschluss-Element (24) aufweist, dass das Interface (12, 22) kurzschließt, das elektrisch von der besagten Fläche aus zugänglich ist, um das besagte Interface daran zu hindern, nach außen zu kommunizieren.

2. Chipkarte nach Anspruch 1, **dadurch gekennzeichnet, dass** das Etikett seine Wiederanbringung nach seinem Ablösen offenbaren kann.

3. Chipkarte nach Anspruch 1 oder 2, **dadurch gekennzeichnet, dass** das Etikett einen isolierenden Film aufweist, der eine elektrische Verbindung verhindert.

4. Chipkarte nach Anspruch 1, **dadurch gekennzeichnet, dass** sie eine interne Antenne und Verbindungselemente der Antenne mit dem besagten Kurzschluss-Element (24) aufweist.

5. Chipkarte nach Anspruch 4, **dadurch gekennzeichnet, dass** die Verbindungselemente durch metallisierte Bohrungen gebildet werden.

6. Chipkarte nach Anspruch 4, **dadurch gekennzeichnet, dass** das Interface vom Typ mit Kontakt und Antenne ist, und dass die besagten Verbindungselemente über das Kontakt-Interface mit dem Kurzschluss-Element verbunden sind.

7. Chipkarte nach einem der vorangehenden Ansprüche, **dadurch gekennzeichnet, dass** das Etikett (19) eine nicht geklebte Greiflasche (20) aufweist.

8. Chipkarte nach einem der vorangehenden Ansprüche, **dadurch gekennzeichnet, dass** das Etikett (22) einen Ausschnitt (20) aufweist, der beim Abreißen seine Zerstörung verursacht.

9. Chipkarte nach einem der vorangehenden Ansprüche, **dadurch gekennzeichnet, dass** das Etikett (14) aus einem Material besteht, das unter der Wirkung einer mechanischen Belastung sein Aussehen ändert.

10. Chipkarte nach einem der vorangehenden Ansprüche, **dadurch gekennzeichnet, dass** das Etikett (14) auf seiner Außenseite eine Information aufweist.

## Claims

1. A smart card (10) having an electronic module provided with an electrical and/or electromagnetic communication interface consisting of electrical contacts (12) and/or an antenna (22), **characterised in that** it has at least one guarantee label (14) glued on one of its surfaces and able to be unstuck with adhesive rupture, the said label having on its bottom face a short-circuit element (24) short-circuiting the interface (12, 22), which is electrically accessible from the said surface in order to prevent the said interface from communicating with the outside.

2. A smart card according to Claim 1, **characterised in that** the label is able to show if it is repositioned after it is unstuck.

3. A smart card according to Claim 1 or 2, **characterised in that** the label has an insulating film preventing electrical communication.

4. A smart card according to Claim 1, **characterised in that** it has an internal antenna and elements for connecting the antenna with the said short-circuit element (24).

5. A smart card according to Claim 4, **characterised in that** the connecting elements are formed by metallised wells.

6. A smart card according to Claim 4, **characterised in that** the interface is of the type with contact and antenna, and **in that** the said connecting elements are connected to the short-circuit element via the interface with contacts.

7. A smart card according to one of the preceding claims, **characterised in that** the label (14) has a non-glued gripping tongue (20).

8. A smart card according to any one of the preceding claims, **characterised in that** the label (22) has a score (20) causing its destruction when torn off.

9. A smart card according to any one of the preceding claims, **characterised in that** the label (14) is produced from a material changing appearance under the action of a mechanical stress.

10. A smart card according to any one of the preceding claims, **characterised in that** the label (14) has information on its external face.
